# EUROPEAN PATENT SPECIFICATION

(11) **EP 3 195 719 B1**
(45) Date of publication and mention of the grant of the patent: **24.10.2018**
(21) Application number: 16195680.0
(22) Date of filing: 26.10.2016
(51) Int. Cl.: A01D 41/127, A01F 25/18

(54) **AGRICULTURAL MACHINE**
LANDWIRTSCHAFTLICHE MASCHINE
MACHINE AGRICOLE

(30) Priority: 20.01.2016 DE 102016100850
(43) Date of publication of application: 26.07.2017
(73) Proprietor: CLAAS E-Systems KGaA mbH & Co KG, 49201 Dissen a.T.W. (DE)
(72) Inventor: Ingibergsson, Johann, 2400 Copenhagen N.V. (DK); Lundberg Lykkegaard, Kasper, 2300 København S (DK); Blas, Morten Rufus, 2800 Kongens Lyngby (DK); Madsen, Ertbolle Madsen, Fremont CA, CA California 94536 (US)
(74) Representative: Budach, Steffen

(56) References cited:
- EP-A1- 1 356 729
- EP-A1- 3 011 824

## Description

The invention is directed to an agricultural machine for conducting an agricultural working process with the features of the general part of claim 1 and to a method for conducting agricultural working processes with the features of the general part of claim 10.

In order to increase the efficiency of agricultural processes such as harvesting processes, it is important to have detailed knowledge not only about the agricultural machine, but also about the conditions provided by the agricultural field to be worked on. One aspect of this is the condition of the ground, in particular of the soil which the crop to be harvested is growing on. Relevant ground information is, for example, the density of the ground, the distribution of impurities like stones, metal pieces or the like within the ground, the occurrence of clay layers or the like. With this ground information it is possible to adapt machine parameters in order to prevent collisions due to hidden obstacles like partly buried stones, in particular to adapt the height of a front attachment of a combine in order to ensure constant harvesting results even with uneven ground surface.

The known agricultural machine (EP 1 356 729 B1), which is the starting point for the present invention, comprises a radar sensor, which is directed to the ground in order to detect the surface of the ground. Based on this information the front attachment of the agricultural machine, which in this example is a combine, is automatically adjusted, such that the front attachment always keeps the same distance to the surface of the ground, even if this surface is of uneven structure.

The known agricultural machine provides a robust agricultural working process in view of the vertical positioning of the front attachment. However, it appears that a comprehensive understanding of the condition of the ground is necessary to further improve the agricultural working process. It also appears that due to numerous relevant parameters the condition of the ground is of complex nature. It is therefore the object of the present invention to improve the known agricultural machine such that the efficiency of the agricultural working process is increased.

The above noted object is solved for an agricultural machine according to the general part of claim 1 by the features of the characterizing part of claim 1.

The general idea underlying the invention is to not only analyze the surface of the ground, but also to find information, which is relevant to the agricultural working process, within the subsurface of the ground, i.e. under the surface of the ground.

In detail, it is proposed that the agricultural machine comprises a sensor arrangement, which again comprises at least one ground penetrating radar sensor. While ground penetrating radar (GPR) as such is a known technology, according to the present invention, it has been found that this technology may well be integrated into the agricultural working process, which is being conducted by the agricultural machine in question.

The ground penetrating radar sensor according to the invention obtains a ground information in a detection area below the surface of the ground. The agricultural machine is provided with a driver assistance system, which the sensor arrangement is assigned to, which driver assistance system data-processes the obtained ground information. This data-processing may be directed to conducting the agricultural working process, during which the ground information is being obtained. In addition or alternatively it may be advantageous to use the obtained ground information for subsequent working processes. This will be explained later in further detail.

With the proposed solution it is possible to obtain ground information which has an influence on the present agricultural working process and/or on subsequent agricultural working processes. This may be information regarding the density of the ground, in particular of the soil, regarding impurities or the like. It may also be abstract parameters, that statistically provide an indication for a certain outcome of the agricultural working process.

According to claim 2 the obtained ground information is used online during the running agricultural working process, in particular for optimizing the control of machine organs. This ensures that the control of the machine organs is adapted as closely to the onsite conditions as possible.

In addition or alternatively, according to claim 3, it is proposed to store the obtained information after a step of georeferencing in a local memory or a data base such that the ground information may be relied on by subsequent agricultural working processes. This offline-approach may well be combined with the above noted online-approach in order to achieve best results in terms of efficiency.

Preferred claims 4 and 5 give examples on ground information which may be obtained by the proposed sensor arrangement. The proposed solution shall not be restricted to those examples for ground information.

Further preferred claim 7 is directed to a self-propelled harvesting machine, which comprises an adjustable front attachment with a cutting arrangement. The agricultural working process of such self-propelled harvesting machines is in most cases very responsive to a change in condition regarding any part of the surrounding, such that the effect of the proposed solution for such self-propelled harvesting machines is most evident.

A second teaching according to claim 10, which is of independent importance, is directed to a method for conducting agricultural working processes with agricultural machines.

According to the proposed method, within a running agricultural working process, a ground information in a detection area below the surface of the ground is being obtained, wherein the obtained ground information is being data-processed for the running agricultural working process and/or for subsequent working processes. Preferably, but not necessarily, the agricultural machine is designed according to the first teaching.

Just as the first teaching, the second teaching goes back on the idea to obtain ground information in a detection area below the surface of the ground within a running agricultural working process and to use this obtained ground information for the running agricultural working process and/or for subsequent working processes. The result is an increase of the efficiency of the running agricultural working process and/or of subsequent agricultural working processes. All explanations given for the first teaching are equally applicable for the second teaching.

Generally the working process in question may be a harvesting process as noted above. However, according to claim 13, the working process may be the process of compacting silo material in a bunker silo by driving the agricultural machine across the silo material. The purpose of driving the agricultural machine back and forth across the silo material is to reach a certain density of the silo material and as a result to reach a predefined filling degree of the bunker silo. Accordingly the ground information, which is being obtained within a running agricultural working process represents the resulting density of the silo material in the detection area.

Claims 14 and 15 are directed to an automatic reaction on a change in density of the silo material. For this, at least one threshold value for the density of the silo material is being stored, wherein control commands are being produced when exceeding and/or undercutting the respective threshold value. Such control commands may be display commands for displaying user information via a man-machine-interface, steering commands for steering the agricultural machine via an actor based steering system or the like. Other control commands are possible.

Further details, features, goals and advantages of the present invention shall be described in the following based on the illustration of a preferred embodiment. In the illustration, the figure shows the following:
- Fig. 1: a schematic diagram of a proposed agricultural machine, which is suitable for conducting a harvesting process according to the proposed method and
- Fig. 2: a schematic diagram of another proposed agricultural machine, which is suitable for conducting the process of compacting silo material in a bunker silo.

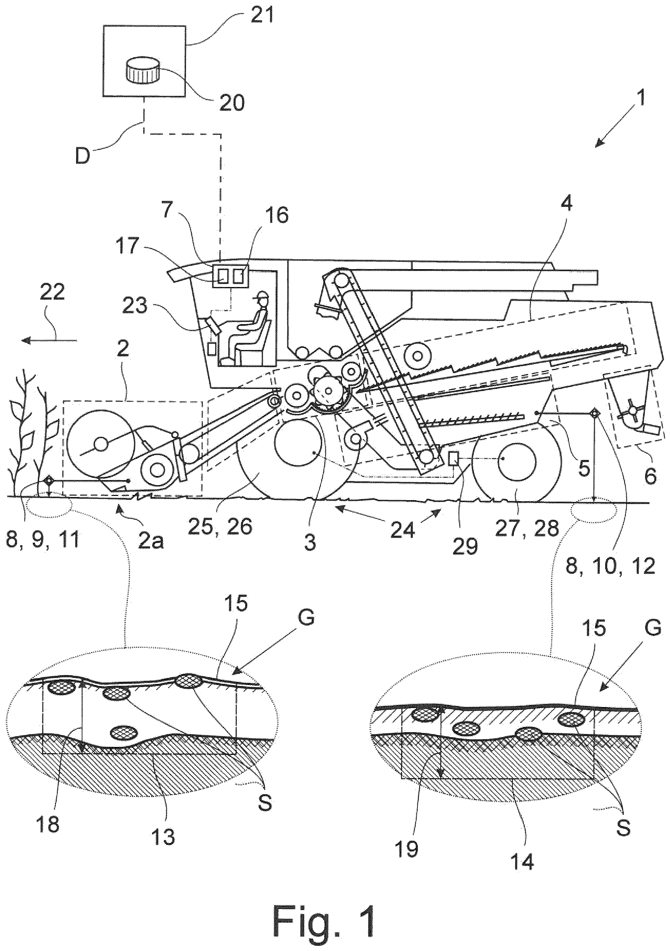

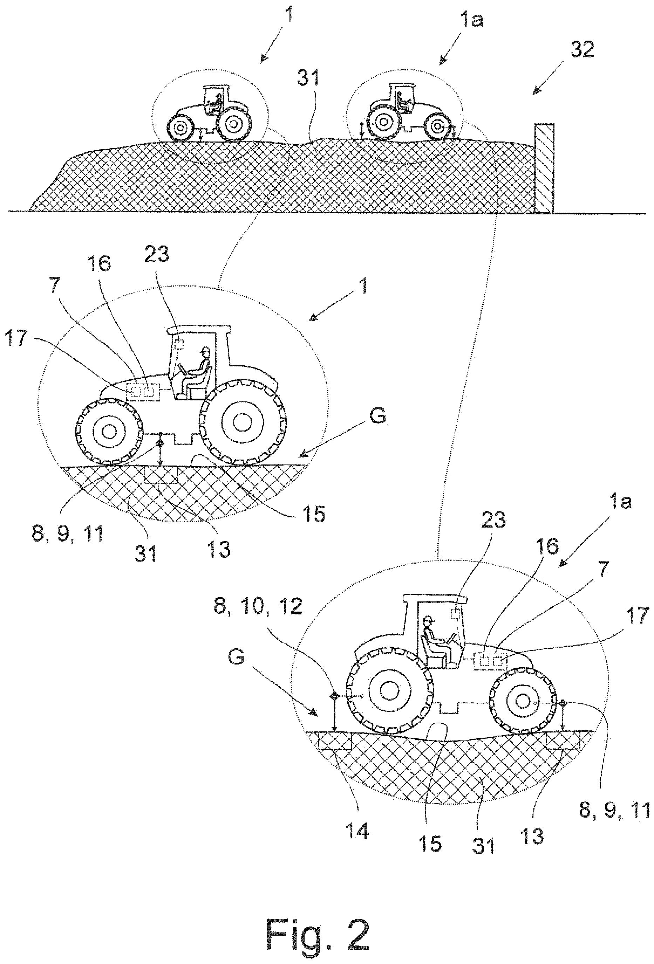

The agricultural machine 1 shown in Fig. 1 is designed as a combine as will be explained later. However, the proposed solution may be applied to any agricultural machine. For example, the agricultural machine may be a tractor as shown in Fig. 2, a forage harvester or the like.

The proposed agricultural machine 1 serves for conducting an agricultural working process as a harvesting process for example. The agricultural machine 1 comprises at least one working organ 2-6 and a driver assistance system 7, which here and preferably serves for the control of the at least one working organ 2-6. Here and preferably the agricultural machine 1 comprises a number of working organs 2-6, for example a front attachment 2, a threshing unit 3, a separating unit 4, a cleaning unit 5 and a distribution unit 6. Other working organs, not shown in the drawings, are a traction drive, a steering drive or the like.

The agricultural machine 1 also comprises a sensor arrangement 8, which again comprises at least one radar sensor 9, 10, here and preferably two radar sensors 9, 10.

It is essential for the proposed solution that the sensor arrangement 8 comprises at least one ground penetrating radar sensor, here and preferably two ground penetrating radar sensors 11, 12, which are the above noted radar sensors 9, 10.

The ground penetrating radar sensors 11, 12, within a running agricultural working process, each obtain a ground information D in a detection area 13, 14 below the surface 15 of the ground G. The driver assistance system 7 here and preferably comprises a memory 16 and a processing unit 17 for data-processing of those data stored in the memory 16.

The driver assistance system 7, here and preferably with its processing unit 17, data-processes the obtained ground information D for the running agricultural working process and/or for subsequent working processes as will be explained later.
It may be pointed out that the detection area 13, 14 of the ground penetrating radar sensors 11, 12 is the area which is limited by the surface 15 of the ground G. The depth 18, 19 of the respective detection area 13, 14 is less than 2 meter, preferably less than 1 meter, further preferably less than 0,75 meter. The depth of the respective detection area 13, 14 represents the penetration depth of the radar ray into the ground G.

There are several possibilities for the driver assistance system 7 to data-process the obtained ground information D.
One preferred possibility is that the driver assistance system 7, within the agricultural working process, data-processes the obtained ground information D by controlling at least one working organ 2-6 based on the ground information D, which has been obtained during the running agricultural working process. This is to be considered an online data-processing. Alternatively, the driver assistance system 7 controls at least one working organ 2-6 based on the ground information D, which has been obtained within a previous agricultural working process. This, on the other hand, is to be considered an offline data-processing.
The obtained ground information D is preferably used for mapping of a field, which means that the obtained field information is stored in a data base such that this information may be retrieved whenever an agricultural working process is to be conducted on this respective field. For this, here and preferably, the driver assistance system 7 data-processes the obtained ground information D by georeferencing the obtained ground information D. This means that the driver assistance system 7 assigns each ground information D to the respective position information within the field. Preferably, for obtaining the position information, the driver assistance system 7 comprises a positioning system, preferably a GPS-based positioning system. The georeferenced ground information D is being stored in the memory 16 by the driver assistance system 7. In addition or alternatively the georeferenced ground information D is being transmitted to a data base 20 by the driver assistance system 7. Here and preferably the data base 20 is located on a data server 21, which is remote from the agricultural machine 1. The server 21 may be a central server which administrates numerous data bases 20 representing the respective field information.

One advantage of storing the obtained ground information D in a data base 20 is the availability of the obtained ground information D for all subsequent agricultural working processes. Further it may be possible to establish a complete history of the obtained information such that trends in changes of the ground condition may be detected. Those trends may trigger certain measures to counteract the detected trend.
The basic working principle of a radar system makes it possible to conclude, which condition the ground is in regarding various criteria. This is because the radar ray at least partly penetrates the ground, while at least part of the radar ray is being reflected back to the radar sensor. Based on the reflected radar ray it is possible to determine the respective ground information D.

It is preferred that the radar sensors 11, 12 determine a value for the time required for the sent radar ray to be reflected back to the radar sensor 11, 12, which value corresponds to a distance between the respective radar sensor 11, 12 and the point of reflection. Alternatively or in addition it is possible for the radar sensors 11, 12 to evaluate, how the sent radar ray has been dampened before having been reflected to the respective radar sensor 11, 12. This may give an information about the characteristics of the ground G depending of the level of absorbtion of the radar ray.
In a preferred embodiment, the obtained ground information D at least represents the location and/or distribution of impurities within the ground. Such impurities are particularly stones S and/or metal pieces.
This ground information D is being obtained by evaluating in which depth under the surface 15 of the ground G the radar ray is being reflected. Based on those measurements the location of the impurities respective the distribution of the impurities can be determined.

Another ground information which may be obtained with the proposed solution represents the density of the soil in the respective detection area 13, 14. This is based on the realization that the density of the soil in the respective detection area 13, 14 influences the reflection of the radar ray, such that the density of the soil may be determined based on the reflected radar ray. Depending on the surrounding, such ground information D may only give an indication of the density of the soil in the detection area 13, 14, and not an exact value of such density.

With the ground information D representing the density of the soil, a soil compaction, that may go back on the agricultural machine 1 driving over the ground G, may easily be detected.

Such detection of soil compaction may well be applied in large silo arrangements which are being fed by agricultural machines 1 as tractors or the like. Here it is important to know the density of the silo material in order to be able to estimate the filling degree of the silo. This application of the proposed solution is shown in Fig. 2 and will be explained later.

Other ground information may be obtained using the proposed ground penetrating radar sensors 11, 12. For example, it is possible to detect aqueous soil areas within a field as the radar ray is well reflected by water. Another possibility is the detection of clay layers, which again provide good reflection of the radar ray. Finally it is possible to detect different kinds of soil based on the reflected radar ray, as different kinds of soil may be differentiated based on their density on the one hand and based on their water content on the other hand.

As the reflection of the radar ray is being influenced by numerous local conditions such as air moisture, temperature or the like, it is preferred that before obtaining the respective ground information D, a reference measurement is performed.

In addition, to determine the ground condition under the surface it may be advantageous to lay out the sensor arrangement 8 such that it also may detect a surface condition, in particular the geometry of the surface, of the ground G. In combination with the above noted detection of the ground condition below the surface 15 this may allow a safe detection of stones S, that are only partly countersunk in the ground G and that partly provide a collision risk regarding a collision with the agricultural machine 1.

In the shown and insofar preferred embodiment the resulting detection area 13, 14 of the sensor arrangement 8 is in front of the agricultural machine 1 and behind the agricultural machine 1 with respect to the forward direction 22 of the agricultural machine 1. With the shown, self-propelled agricultural machine 1 the forward direction 22 is the driving direction during the agricultural working process. However, depending on the application, it may be suitable to arrange the detection area 13, 14 only in front of the agricultural machine 1 or only behind the agricultural machine 1.
With the resulting detection area 13, 14 being in front of the agricultural machine 1 and behind the agricultural machine 1 it is possible to compare the density of the soil, which may be obtained as ground information D as noted above, in front of the agricultural machine 1 and behind the agricultural machine 1. This means that it is possible to evaluate which increase in density in the soil has been caused by the agricultural machine 1 driving over the ground G, which allows to determine measures to counteract this increase in density.

For the ground penetrating radar sensor 11, 12 a measuring frequency between 0,1 GHz and 1 GHz has been proven to provide good and reproducible measurement results.
As noted above, the agricultural machine 1 preferably is a self-propelled harvesting machine, in particular a combine, as shown in Fig. 1. The agricultural machine 1 comprises an adjustable front attachment 2 with a cutting arrangement 2a for cutting the crop to be harvested. Here and preferably, the sensor arrangement 8 is at least temporarily located in the area of the front attachment 2. In the very preferred embodiment shown in Fig. 1 the ground penetrating radar sensor 11 is fixed at the front attachment 2. In addition, the other ground penetrating radar sensor 12 is fixed to a carrier component at the back of the agricultural machine 1.

Alternative locations of the ground penetrating radar sensors 11, 12 are possible. For example, the ground penetrating radar sensor 11 may be arranged at a separate carrier component as shown in Fig. 1 or may be arranged at an existing carrier component of the front attachment 2.

Instead of being a self-propelled harvesting machine, the proposed agricultural machine 1 may well be a self-propelled machine such as a tractor, which conducts agricultural working processes such as plowing or which conducts the agricultural working process of compacting silo material in a bunker silo 32 as shown in Fig. 2.
The driver assistance system 7 may take the obtained ground information D into account during controlling of the working organs 2-6 in different ways.
Here and preferably, the driver assistance system 7, based on the obtained ground information D, adjusts the front attachment 2 or proposes to the user such adjustment via a man-machine-interface 23. An example is obtaining ground information D which leads to the conclusion that an obstacle like a stone S is in the detection area 13 of the ground penetrating radar sensor 11. In this case the driver assistance system 7 lifts the front attachment 2 and at the same time, preferably, stops the forward drive of the agricultural machine 1. It may also be reasonable to shut off all working organs 2-6 of the agricultural machine 1, as far as the working organs 2-6 may be impaired by the above noted risk of a collision.

Another possibility for the driver assistance system 7 to react to the obtained ground information D goes back on the agricultural machine 1 preferably comprising an adjustable chassis 24 with wheels 25-28, wherein the driver assistance system 7, based on the obtained ground information D, adjusts the chassis 24 or proposes to the user such adjustment via the above noted man-machine-interface 23. With respect to the example mentioned above, which represents a collision risk, such collision risk may be reduced by lifting the agricultural machine 1 by adjusting the chassis 24.
In the preferred case that the agricultural machine 1 comprises at least two above noted wheels 25-28 with tires and that the agricultural machine 1 comprises an air pressure unit 29, which air pressure unit 29 may be controlled to change the air pressure of the tires assigned to the wheels 25-28, the driver assistance system 7, based on the obtained ground information D, preferably adjusts the air pressure of the tires or proposes to the user such adjustment via the above noted man-machine-interface 23. The adjustment of the air pressure of the tires may be done based on the above noted ground information D regarding the density of the ground G. By adjusting the air pressure of the tires, it is very possible to reduce their soil compaction caused by the agricultural machine 1 driving over the ground G. Here it is especially advantageous to arrange the detection area 13, 14 of the sensor arrangement 8 in front of the agricultural machine 1 and behind the agricultural machine 1 as noted above.

All above noted measures to react to the obtained ground information D prevents a standstill of the agricultural machine 1 or prevents the impairment of the field for subsequent agricultural working processes, such that the resulting efficiency of the agricultural machine altogether may be increased with the proposed solution.

According to another teaching, a method for conducting agricultural working processes with agricultural machines 1, in particular with an agricultural machine 1 as disclosed above, is claimed.

It is essential for this second teaching, that within a running agricultural working process a ground information D in a detection area 13, 14 below the surface 15 of the ground G is being obtained and that the obtained ground information D is being data-processed for the running agricultural working process and/or for subsequent working processes.

The basic principle of using the obtained ground information D for conducting the agricultural working process is similar to the operation of the agricultural machine 1 according to the first teaching. However, it may be pointed out that according to the proposed method the subsequent working processes may be conducted by any agricultural machine 1, which may or may not be designed according to the first invention. Other than that all explanations given to the operation of the agricultural machine 1 according to the first teaching are fully applicable to the second teaching.

An example for the proposed method is a combine conducting the harvesting process and at the same time obtaining the respective ground information D via the proposed sensor arrangement 8. As noted with respect to the proposed agricultural machine 1, this ground information D is taken into account by the driver assistance system 7 for controlling the working organs 2-6. As, preferably, the obtained ground information D is being georeferenced and is either being stored in a local memory or being transmitted to a database, this ground information D may well be used by subsequent agricultural working processes. This is, for example, a plowing process performed by a tractor. Here and preferably, the plowing depth may be derived from the ground information D obtained by the harvesting machine.

As a result it is preferred that the ground information D, which is obtained within the running agricultural running process, is the basis for the operation of the agricultural machine 1 or another agricultural machine within a subsequent agricultural working process. With the use of the ground information D not only for the running agricultural working process, but possibly also for a subsequent agricultural working process, a double use of the ground information D is resulting, which as such leads to an increase in efficiency.

While the working process according to Fig. 1 is a harvesting process, Fig. 2 shows the working process of compacting silo material 31 in a bunker silo 32. This compacting of the silo material 31, which provides the ground G for the agricultural machine 1 in the above noted sence, is achieved by driving the agricultural machine 1 across the silo material 31. The agricultural machine 1 here and preferably is a tractor, a caterpillar or the like. It is provided with at least one working organ which is at least a traction drive, a steering drive or the like as noted above.

The agricultural machine 1 shown in Fig. 2 also comprises a sensor arrangement 8, which is assigned to a driver assistance system 7. The sensor arrangement 8 comprises at least one radar sensor 9. Fig. 2 also shows another proposed agricultural machine 1a, which sensor arrangement 8 comprises two radar sensors 9, 10, one in front of the agricultural machine 1 and one behind the agricultural machine 1 as noted with respect to Fig. 1 already. Other than that the agricultural machine 1a is identical to the agricultural machine 1 shown in Fig. 2. The overall working principle of the sensor arrangements 8 of the agricultural machines 1, 1a shown in Fig. 2 are identical to the working principle of the sensor arrangement 8 of the agricultural machine 1 shown in Fig. 1. In so far all explanations given for the agricultural machine 1 shown in Fig. 1 may be applied to the agricultural machines 1, 1a shown in Fig. 2.

It is of particular importance that the driver of the agricultural machines 1, 1a shown in Fig. 2 is supported by a control of the agricultural machine 1, in particular by the driver assistance system 7, such that the process of compacting may be performed in the most effective way. At the same time it is to be guaranteed that the silo material 31 is being compacted enough to achieve a predefined filling degree and that the silo material 31 is not compacted too much as to prevent, for example, undesired chemical and/or biological reactions.

As a basis for the above noted support of the user it is preferred that at least one threshold value for the density of the silo material 31 is being stored in a control such as the driver assistance system 7 and that control commands are being produced when exceeding and/or undercutting the threshold value. As an example, the control commands may be display commands for displaying user information via the man-machine-interface 23. In a preferred embodiment, which is particularly easy to realize, the control commands cause the actuation of warning lights, which indicate whether the density of the silo material 31 is to low or to high.

In addition or alternatively, the control commands may be steering commands for steering the agricultural machine 1, 1a via an actor based steering system. This may be advantageous, if the driver assistance system 7 comprises a path-planning unit for planning the driving path of the agricultural machine 1, 1a, in order to guarantee the desired density of the silo material 31.

Preferably, as a basis for the generation of the above noted control commands, a minimum value for the density of the silo material 31 is being stored, wherein the control commands are being produced when exceeding and/or undercutting the minimum value. In addition or alternatively, a maximum value for the density of the silo material 31 is being stored, while the control commands are being produced when exceeding and/or undercutting the maximum value. Those minimum and/or maximum values may be defined by the user via the man-machine-interface 23. It is also possible that those values are dynamic values that are automatically changed by the assistance system 7 dependent from parameters like temperature, geometry or the like.

As a preferred example, the man-machine-interface may display, whether the density of the silo material is below the minimum value (e.g. a yellow signal), between the minimum value and the maximum value (e.g. a green signal) or above the maximum value (e.g. red signal). In an automatic approach, the driver assistance system 7 generates control commands, in particular steering commands, in order to guarantee that the density of the silo material 31 reaches a density value between the minimum value and the maximum value.

It is of particular importance that in the case that the sensor arrangement 8 comprises two radar sensors 9, 10, which are arranged in front of the agricultural machine 1, 1a and behind the agricultural machine 1, 1a, the differences in density of the silo material 31 gives an information of the state of the silo material 31, which may again be the basis of a change in the above noted threshold values. The same effect may however be achieved by controlling the drive motion of the agricultural machine 1 such that the sensor arrangement 8 is positioned above a detection area twice, namely before the compaction and after the compaction.

### Reference sign list

- 1: Agricultural machine
- 2: front attachment
- 2a: cutting arrangement
- 3: Threshing unit
- 4: Separation unit
- 5: Cleaning unit
- 6: Distribution unit
- 7: driver assistance system
- 8: sensor arrangement
- 9, 10: radar sensor
- 11, 12: GPR Sensor
- 13, 14: detection area
- 15: surface
- 16: memory
- 17: processing unit
- 18, 19: depth
- 20: database
- 21: server
- 22: forward direction
- 23: man-machine-interface
- 24: chassis
- 25-28: wheels
- 29: air pressure unit
- 31: silo material
- 32: bunker silo
- G: ground
- D: ground information
- S: Stones

## Claims

1. Agricultural machine for conducting an agricultural working process with at least one working organ (2-6) and with a driver assistance system (7), in particular for the control of the at least one working organ (2-6), wherein a sensor arrangement (8) is assigned to the driver assistance system (7), which sensor arrangement (8) comprises at least one radar sensor (9, 10),
**characterized in**
**that** the sensor arrangement (8) comprises at least one ground penetrating radar sensor (9-12), which within a running agricultural working process obtains a ground information (D) in a detection area (13, 14) below the surface (15) of the ground (G) and that the driver assistance system (7) data-processes the obtained ground information (D) for the running agricultural working process and/or for subsequent working processes.

2. Agricultural machine according to claim 1, **characterized in that** the driver assistance system (7), within the agricultural working process, data-processes the obtained ground information (D) by controlling at least one working organ (2-6) based on the ground information (D), which has been obtained within the running agricultural working process or a previous agricultural working process.

3. Agricultural machine according to claim 1 or 2, **characterized in that** the driver assistance system (7) data-processes the obtained ground information (D) by georeferencing the obtained ground information (D) and storing the georeferenced ground information (D) in a local memory (16) or transmitting the georeferenced ground information (D) to a database (20), in particular to a database (20) on a data server (21), which is remote from the agricultural machine (1).

4. Agricultural machine according to any one of the preceding claims, **characterized in that** the obtained ground information (D) at least represents the density of the soil in the detection area (13, 14), and/or, that the obtained ground information (D) at least represents the location and/or distribution of impurities in the ground, in particular of stones (S) and/or metal pieces.

5. Agricultural machine according to any one of the preceding claims, **characterized in that** the sensor arrangement (8) is laid out such that in addition it may detect a surface condition of the ground (G).

6. Agricultural machine according to any one of the preceding claims, **characterized in that** the detection area (13, 14) of the sensor arrangement (8) is in front of the agricultural machine (1) and/or behind the machine, each with respect to the forward direction of the agricultural machine (1).

7. Agricultural machine according to any one of the preceding claims, **characterized in that** the agricultural machine (1) is a self propelled harvesting machine, in particular a combine, which comprises an adjustable front attachment (2) with a cutting arrangement (2a), and that the sensor arrangement (8) is at least temporarily located in the area of the front attachment (2), preferably, that the driver assistance system (7), based on the obtained ground information (D), adjusts the front attachment (2) or proposes to the user such adjustment via a man-machine-interface (23).

8. Agricultural machine according to any one of the preceding claims, **characterized in that** the agricultural machine (1) comprises an adjustable chassis (24) with wheels (25-28) and that the driver assistance system (7), based on the obtained ground information (D), adjusts the chassis (24) or proposes to the user such adjustment via a man-machine-interface (23).

9. Agricultural machine according to any one of the preceding claims, **characterized in that** the agricultural machine (1) comprises at least two wheels (25-28) with tires and an air pressure unit (29), which air pressure unit (29) may be controlled to change the air pressure of the tires, and that the driver assistance system (7), based on the obtained ground information (D), adjusts the air pressure of the tires or proposes to the user such adjustment via a man-machine-interface (23).

10. Method for conducting agricultural working processes with agricultural machines (1), in particular with an agricultural machine (1) according to any one of the preceding claims,
**characterized in**
**that** within a running agricultural working process a ground information (D) in a detection area (13, 14) below the surface (15) of the ground (G) is being obtained and that the obtained ground information (D) is being data-processed for the running agricultural working process and/or for subsequent working processes.

11. Method according to claim 10, **characterized in that** the obtained ground information (D) is being georeferenced and is being stored in a local memory or transmitted to a database, in particular to a database (20) on a data server (21), which is remote from the agricultural machine (1).

12. Method according to claim 10 or 11, **characterized in that** the ground information (D), which is obtained within the running agricultural working process, is the basis for the operation of the agricultural machine (1) or another agricultural machine within a subsequent agricultural working process.

13. Method according to any one of claims 10 to 12, **characterized in that** the working process is the process of compacting silo material (31) in a bunker silo (32) by driving the agricultural machine (1, 1a) across the silo material (31) and that the ground information (D) represents the resulting density of the silo material (31) in the detection area (13, 14).

14. Method according to claim 13, **characterized in that** at least one threshold value for the density of the silo material (31) is being stored and that control commands are being produced when exceeding and/or undercutting the threshold value, preferably, that the control commands are display commands for displaying user information via a man-machine-interface (23) and/or steering commands for steering the agricultural machine (1, 1a) via an actor based steering system.

15. Method according to claim 13 or 14, **characterized in that** a minimum value for the density of the silo material (31) is being stored and that the control commands are being produced when exceeding and/or undercutting the minimum value, and/or, that a maximum value for the density of the silo material (31) is being stored and that the control commands are produced when exceeding and/or undercutting the maximum value.

## Patentansprüche

1. Landwirtschaftliche Maschine zum Durchführen eines landwirtschaftlichen Arbeitsprozesses mit zumindest einem Arbeitsorgan (2-6) und mit einem Fahrerassistenzsystem (7), insbesondere zur Steuerung des zumindest einen Arbeitsorgans (2-6), wobei dem Fahrerassistenzsystem (7) eine Sensoranordnung (8) zugeordnet ist, wobei die Sensoranordnung (8) zumindest einen Radarsensor (9, 10) umfasst,
**dadurch gekennzeichnet,**
**dass** die Sensoranordnung (8) zumindest einen Bodendurchdringungsradarsensor (9-12) umfasst, der innerhalb eines laufenden landwirtschaftlichen Arbeitsprozesses eine Bodeninformation (D) in einem Erkennungsbereich (13, 14) unterhalb der Oberfläche (15) des Bodens (G) erfasst, und dass das Fahrerassistenzsystem (7) die erfasste Bodeninformation (D) für den laufenden landwirtschaftlichen Arbeitsprozess und/oder für nachfolgende Arbeitsprozesse datenverarbeitet.

2. Landwirtschaftliche Maschine nach Anspruch 1, **dadurch gekennzeichnet, dass** das Fahrerassistenzsystem (7), innerhalb des landwirtschaftlichen Arbeitsprozesses, die erfasste Bodeninformation (D) durch Steuern von zumindest einem Arbeitsorgan (2-6) auf Grundlage der Bodeninformation (D) datenverarbeitet, welche innerhalb des laufenden landwirtschaftlichen Arbeitsprozesses oder eines vorhergehenden landwirtschaftlichen Arbeitsprozesses erfasst wurde.

3. Landwirtschaftliche Maschine nach einem der Ansprüche 1 oder 2, **dadurch gekennzeichnet, dass** das Fahrerassistenzsystem (7) die erfasste Bodeninformation (D) durch Georeferenzieren der erfassten Bodeninformation (D) und Speichern der georeferenzierten Bodeninformation (D) in einem lokalen Speicher (16) oder Übertragen der georeferenzierten Bodeninformation (D) an eine Datenbank (20), insbesondere an eine Datenbank (20) in einem Server (21), der von der landwirtschaftlichen Maschine entlegen ist, datenverarbeitet.

4. Landwirtschaftliche Maschine nach einem der vorhergehenden Ansprüche, **dadurch gekennzeichnet, dass** erfasste Bodeninformation (D) zumindest die Dichte des Erdbodens im Erkennungsbereich (13, 14) darstellt, und/oder dass die erfasste Bodeninformation (D) zumindest die Lage und/oder Verteilungen von Fremdkörpern im Boden darstellt, insbesondere von Steinen (S) und/oder Metallstücken.

5. Landwirtschaftliche Maschine nach einem der vorhergehenden Ansprüche, **dadurch gekennzeichnet, dass** die Sensoranordnung (8) derart ausgelegt ist, dass sie zusätzlich eine Oberflächenbedingung des Bodens (G) erkennen kann.

6. Landwirtschaftliche Maschine nach einem der vorhergehenden Ansprüche, **dadurch gekennzeichnet, dass** der Erkennungsbereich (13, 14) der Sensoranordnung (8) vor der landwirtschaftlichen Maschine (1) und/oder hinter der Maschine liegt, jeweils bezüglich der Vorwärtsrichtung der landwirtschaftlichen Maschine (1).

7. Landwirtschaftliche Maschine nach einem der vorhergehenden Ansprüche, **dadurch gekennzeichnet, dass** die landwirtschaftliche Maschine (1) eine selbstfahrende Erntemaschine, insbesondere ein Mähdrescher, ist, die die einen einstellbaren vorderen Ansatz (2) mit einer Schneidanordnung (2a) umfasst, und dass sich die Sensoranordnung (8) zumindest zweitweise im Bereich des vorderen Ansatzes (2) befindet, vorzugsweise dass das Fahrerassistenzsystem (7) auf Grundlage der erfassten Bodeninformation (D) den vorderen Ansatz einstellt oder dem Benutzer eine derartige Einstellung über eine Mensch-Maschinen-Schnittstelle (23) vorschlägt.

8. Landwirtschaftliche Maschine nach einem der vorhergehenden Ansprüche, **dadurch gekennzeichnet, dass** die landwirtschaftliche Maschine (1) ein einstellbares Fahrgestell (24) mit Rädern (25-28) umfasst, und dass das Fahrerassistenzsystem (7) auf Grundlage der erfassten Bodeninformation (D) das Fahrgestell (24) einstellt oder dem Benutzer eine derartige Einstellung über eine Mensch-Maschinen-Schnittstelle (23) vorschlägt.

9. Landwirtschaftliche Maschine nach einem der vorhergehenden Ansprüche, **dadurch gekennzeichnet, dass** die landwirtschaftliche Maschine (1) zumindest zwei Räder (25-28) mit Reifen und eine Luftdruckeinheit (29) umfasst, wobei die Luftdruckeinheit (29) zum Ändern des Luftdrucks der Reifen gesteuert werden kann, und dass das Fahrerassistenzsystem (7) auf Grundlage der erfassten Bodeninformation (D) den Luftdruck der Reifen einstellt oder dem Benutzer eine derartige Einstellung über eine Mensch-Maschinen-Schnittstelle (23) vorschlägt.

10. Verfahren zum Durchführen von landwirtschaftlichen Arbeitsprozessen mit landwirtschaftlichen Maschinen (1), insbesondere mit einer landwirtschaftlichen Maschine (1) nach einem der vorhergehenden Ansprüche,
**dadurch gekennzeichnet,**
**dass** innerhalb eines laufenden landwirtschaftlichen Arbeitsprozesses eine Bodeninformation (D) in einem Erkennungsbereich (13, 14) unterhalb der Oberfläche (15) des Bodens (G) erfasst wird, und dass die erfasste Bodeninformation (D) für den laufenden landwirtschaftlichen Arbeitsprozess und/oder für nachfolgende Arbeitsprozesse datenverarbeitet wird.

11. Verfahren nach Anspruch 10, **dadurch gekennzeichnet, dass** die erfasste Bodeninformation (D) georeferenziert wird und in einem lokalen Speicher gespeichert oder an eine Datenbank übertragen wird, insbesondere eine Datenbank (20) in einem Server (21), der von der landwirtschaftlichen Maschine (1) entlegen ist.

12. Verfahren nach einem der Ansprüche 10 oder 11, **dadurch gekennzeichnet, dass** die Bodeninformation (D), die innerhalb des laufenden landwirtschaftlichen Arbeitsprozesses erfasst wird, die Grundlage für den Betrieb der landwirtschaftlichen Maschine (1) oder einer anderen landwirtschaftlichen Maschine innerhalb eines nachfolgenden landwirtschaftlichen Arbeitsprozesses bildet.

13. Verfahren nach einem der Ansprüche 10 bis 12, **dadurch gekennzeichnet, dass** der Arbeitsprozess der Prozess des Verdichtens von Silomaterial (31) in einem Silo (32) durch Fahren der landwirtschaftlichen Maschine (1) über das Silomaterial (31) ist, und dass die Bodeninformation (D) die resultierende Dichte des Silomaterials (31) im Erkennungsbereich (13, 14) ist.

14. Verfahren nach Anspruch 13, **dadurch gekennzeichnet, dass** zumindest ein Schwellenwert für die Dichte des Silomaterials (31) gespeichert wird, und dass Steuerbefehle erzeugt werden, wenn der Schwellenwert überschritten und/oder unterschritten wird, vorzugsweise dass die Steuerbefehle Anzeigenbefehle zum Anzeigen von Benutzerinformation über eine Mensch-Maschinen-Schnittstelle (23) und/oder Lenkbefehle zum Lenken der landwirtschaftlichen Maschine (1, 1a) über ein aktorbasiertes Lenksystem sind.

15. Verfahren nach einem der Ansprüche 13 oder 14, **dadurch gekennzeichnet, dass** ein Minimalwert für die Dichte des Silomaterials (31) gespeichert wird, und dass die Steuerbefehle erzeugt werden, wenn der Minimalwert überschritten und/oder unterschritten wird, und/oder dass ein Maximalwert für die Dichte des Silomaterials (31) gespeichert wird, und dass die Steuerbefehle erzeugt werden, wenn der Maximalwert überschritten und/oder unterschritten wird.

## Revendications

1. Machine agricole pour réaliser un processus de travail agricole, comprenant au moins un organe de travail (2-6) et comprenant un système d'assistance à la conduite (7), en particulier pour la commande du au moins un organe de travail (2-6), dans lequel un agencement de capteurs (8) est affecté au système d'assistance à la conduite (7), lequel agencement de capteurs (8) comprend au moins un capteur radar (9, 10), **caractérisée en ce que** l'agencement de capteurs (8) comprend au moins un capteur radar à pénétration de sol (9-12) qui, dans le cadre d'un processus de travail agricole en cours, obtient une information de sol (D) dans une zone de détection (13, 14) sous la surface (15) du sol (G), et **en ce que** le système d'assistance à la conduite (7) traite l'information de sol obtenue (D) pour le processus de travail agricole en cours et/ou pour des processus de travail ultérieurs.

2. Machine agricole selon la revendication 1, **caractérisée en ce que**, dans le cadre du processus de travail agricole, le système d'assistance à la conduite (7) traite l'information de sol obtenue (D) en commandant au moins un organe de travail (2-6) sur la base de l'information de sol (D) qui a été obtenue dans le cadre du processus de travail agricole en cours ou d'un processus de travail agricole antérieur.

3. Machine agricole selon la revendication 1 ou 2, **caractérisée en ce que** le système d'assistance à la conduite (7) traite l'information de sol obtenue (D) en géoréférençant l'information de sol obtenue (D) et en mémorisant l'information de sol géoréférencée (D) dans une mémoire locale (16) ou en transmettant l'information de sol géoréférencée (D) à une base de données (20), en particulier à une base de données (20) sur un serveur de données (21) qui est distant de la machine agricole (1).

4. Machine agricole selon l'une quelconque des revendications précédentes, **caractérisée en ce que** l'information de sol obtenue (D) représente au moins la densité du sol dans la zone de détection (13, 14) et/ou **en ce que** l'information de sol obtenue (D) représente au moins l'emplacement et/ou la répartition d'impuretés dans le sol, en particulier de pierres (S) et/ou de pièces métalliques.

5. Machine agricole selon l'une quelconque des revendications précédentes, **caractérisée en ce que** l'agencement de capteurs (8) est conçu de façon à pouvoir en outre détecter un état de surface du sol (G) .

6. Machine agricole selon l'une quelconque des revendications précédentes, **caractérisée en ce que** la zone de détection (13, 14) de l'agencement de capteurs (8) est devant la machine agricole (1) et/ou derrière la machine, à chaque fois par rapport à la direction avant de la machine agricole (1).

7. Machine agricole selon l'une quelconque des revendications précédentes, **caractérisée en ce que** la machine agricole (1) est une machine de récolte automotrice, en particulier une moissonneuse-batteuse, qui comprend un outil frontal réglable (2) avec un dispositif de coupe (2a), et **en ce que** l'agencement de capteurs (8) est disposé au moins temporairement dans la zone de l'outil frontal (2), de préférence **en ce que**, sur la base de l'information de sol obtenue (D), le système d'assistance à la conduite (7) règle l'outil frontal (2) ou propose à l'utilisateur un tel réglage par l'intermédiaire d'une interface homme-machine (23) .

8. Machine agricole selon l'une quelconque des revendications précédentes, **caractérisée en ce que** la machine agricole (1) comprend un châssis réglable (24) avec des roues (25-28) et **en ce que**, sur la base de l'information de sol obtenue (D), le système d'assistance à la conduite (7) règle le châssis (24) ou propose à l'utilisateur un tel réglage par l'intermédiaire d'une interface homme-machine (23).

9. Machine agricole selon l'une quelconque des revendications précédentes, **caractérisée en ce que** la machine agricole (1) comprend au moins deux roues (25-28) avec des pneumatiques et une unité de pression d'air (29), laquelle unité de pression d'air (29) peut être commandée pour modifier la pression d'air des pneumatiques, et **en ce que**, sur la base de l'information de sol obtenue (D), le système d'assistance à la conduite (7) règle la pression d'air des pneumatiques ou propose à l'utilisateur un tel réglage par l'intermédiaire d'une interface homme-machine (23).

10. Procédé pour réaliser des processus de travail agricoles avec des machines agricoles (1), en particulier avec une machine agricole (1) selon l'une quelconque des revendications précédentes, **caractérisé en ce que**, dans le cadre d'un processus de travail agricole en cours, une information de sol (D) dans une zone de détection (13, 14) sous la surface (15) du sol (G) est obtenue et **en ce que** l'information de sol obtenue (D) est traitée pour le processus de travail agricole en cours et/ou pour des processus de travail ultérieurs.

11. Procédé selon la revendication 10, **caractérisé en ce que** l'information de sol obtenue (D) est géoréférencée et est mémorisée dans une mémoire locale ou transmise à une base de données, en particulier à une base de données (20) sur un serveur de données (21) qui est distant de la machine agricole (1).

12. Procédé selon la revendication 10 ou 11, **caractérisé en ce que** l'information de sol (D) qui est obtenue dans le cadre du processus de travail agricole en cours sert de base au fonctionnement de la machine agricole (1) ou d'une autre machine agricole dans le cadre d'un processus de travail agricole ultérieur.

13. Procédé selon l'une quelconque des revendications 10 à 12, **caractérisé en ce que** le processus de travail est le processus de compactage de matière ensilée (31) dans un silo-tranchée (32) par passage de la machine agricole (1, 1a) à travers la matière ensilée (31), et **en ce que** l'information de sol (D) représente la densité résultante de la matière ensilée (31) dans la zone de détection (13, 14).

14. Procédé selon la revendication 13, **caractérisé en ce qu'**au moins une valeur de seuil pour la densité de la matière ensilée (31) est mémorisée et **en ce que** des instructions de commande sont générées en cas de surpassement et/ou de soupassement de la valeur de seuil, de préférence **en ce que** les instructions de commande sont des instructions d'affichage pour afficher des informations utilisateur par l'intermédiaire d'une interface homme-machine (23) et/ou des instructions de direction pour diriger la machine agricole (1, 1a) par l'intermédiaire d'un système directeur à actionneurs.

15. Procédé selon la revendication 13 ou 14, **caractérisé en ce qu'**une valeur minimale pour la densité de la matière ensilée (31) est mémorisée et **en ce que** les instructions de commande sont générées en cas de surpassement et/ou de soupassement de la valeur minimale, et/ou **en ce qu'**une valeur maximale pour la densité de la matière ensilée (31) est mémorisée et **en ce que** les instructions de commande sont générées en cas de surpassement et/ou de soupassement de la valeur maximale.
